# FASCICULE DE BREVET EUROPEEN

(11) **EP 4 344 590 B1**
(45) Date de publication et mention de la délivrance du brevet: **30.04.2025**
(21) Numéro de dépôt: 23200545.4
(22) Date de dépôt: 28.09.2023
(51) Int. Cl.: A47J 37/06

(54) **APPAREIL DE CUISSON AVEC DOUBLE INTERFACE UTILISATEUR**
KOCHGERÄT MIT DOPPELTER BENUTZERSCHNITTSTELLE
COOKING APPLIANCE WITH DUAL USER INTERFACE

(30) Priorité: 30.09.2022 FR 2210019
(43) Date de publication de la demande: 03.04.2024
(73) Titulaire: SEB S.A., 69130 Ecully (FR)
(72) Inventeur: ROBIN, Jean-Philippe, 69134 ECULLY CEDEX (FR)
(74) Mandataire: SEB Développement

(56) Documents cités:
- US-A1- 2007 119 442
- US-B2- 10 321 784
- US-B2- 11 122 931

## Description

### Domaine technique

La présente invention concerne de manière générale un appareil de cuisson pour la cuisson de produits alimentaires, et en particulier un appareil de cuisson électrique de type grill et / ou barbecue.

### Etat de la technique

Il est connu de l'art antérieur d'utiliser un appareil de cuisson qui comprend :
- une première structure comportant une première plaque de cuisson configurée pour cuire un aliment ;
- une deuxième structure comportant une deuxième plaque de cuisson, la deuxième structure étant montée articulée par rapport à la première structure autour d'un axe de pivotement, et
- une interface utilisateur qui est prévue sur la première structure et qui est configurée pour permettre à un utilisateur de sélectionner au moins un paramètre de fonctionnement de l'appareil de cuisson.

L'appareil de cuisson tel que connu dans l'art antérieur peut alternativement occuper une fonction dite « grill » dans lequel un aliment est destiné à être enserré et cuit entre les première et deuxième plaques de cuisson, et une deuxième fonction dite « barbecue » dans lequel les première et deuxième plaques de cuisson sont écartées à 180° de sorte à être sensiblement dans un même plan, ledit plan étant généralement horizontal lorsque l'appareil de cuisson repose sur une surface horizontale.

L'appareil de cuisson tel que décrit dans l'art antérieur permet de façon avantageuse d'utiliser un seul appareil électroménager afin de répondre à deux fonctions distinctes : celle de grill alimentaire, et celle de barbecue.

Afin d'améliorer l'utilisation et l'ergonomie de cette famille d'appareil de cuisson, il est avantageux de prévoir une interface utilisateur qui soit facile et pratique d'accès pour un utilisateur dans l'ensemble des modes de cuisson, à savoir le mode grill et le mode barbecue. A cet effet, il est connu de disposer l'interface utilisateur sur une face frontale de la première structure ; cependant, une telle disposition de l'interface utilisateur empêche de pourvoir réaliser une collecte des jus de cuisson depuis une face frontale de la première structure.

Il est également connu de l'art antérieur de prévoir l'interface utilisateur sur la deuxième structure de l'appareil de cuisson, et plus précisément sur une partie de manipulation qui est mécaniquement reliée à la deuxième structure ; cependant cette configuration est problématique car elle rend complexe la manipulation de l'interface utilisateur lorsque l'appareil de cuisson est en fonction « barbecue ».

Le document US2007/119442A1 divulgue un appareil de cuisson de l'art antérieur.

### Résumé de l'invention

Le problème technique à la base de l'invention consiste notamment à fournir un appareil de cuisson permettant la cuisson de produits alimentaires dans une configuration grill mais également dans une configuration barbecue, tout en étant ergonomique et simple d'utilisation dans la configuration grill ainsi que dans la configuration barbecue et tout en permettant éventuellement une collecte des jus de cuisson depuis une face frontale de la première structure.

A cet effet, la présente invention concerne un appareil de cuisson pour la cuisson de produits alimentaires, l'appareil de cuisson comportant :
- - une première structure comportant un premier module de cuisson comportant une première plaque de cuisson,
- - une deuxième structure comportant un deuxième module de cuisson comportant une deuxième plaque de cuisson,
- - une liaison pivot reliant la deuxième structure à la première structure et configurée pour permettre un pivotement de la deuxième structure par rapport à la première structure autour d'un axe de pivotement et entre une position de fermeture dans laquelle la première plaque de cuisson et la deuxième plaque de cuisson présentent un écartement minimal, et par exemple sont en contact, et une position d'ouverture maximale dans laquelle la première plaque de cuisson et la deuxième plaque de cuisson présentent un écartement maximal lorsque l'appareil de cuisson repose sur une surface d'appui qui est horizontale,
- - une première interface utilisateur disposée sur la première structure,
- - une unité de commande configurée pour commander le fonctionnement de l'appareil de cuisson,

l'appareil de cuisson présentant un premier mode d'utilisation, dit mode grill, dans lequel un aliment est destiné à être enserré entre les première et deuxième plaques de cuisson, et un deuxième mode d'utilisation, dit mode barbecue, dans lequel chacune des première et deuxième plaques de cuisson est apte à supporter et cuire un aliment respectif, c'est-à-dire dans lequel chacune des première et deuxième plaques de cuisson est opérationnelle,
caractérisé en ce que l'appareil de cuisson comporte une deuxième interface utilisateur disposée sur la deuxième structure, en ce que la première interface utilisateur est dédiée au premier mode d'utilisation et la deuxième interface utilisateur est dédiée au deuxième mode d'utilisation, et en ce que l'unité de commande est configurée pour activer la première interface utilisateur et désactiver la deuxième interface utilisateur lorsque l'appareil de cuisson est dans le premier mode d'utilisation, et pour activer la deuxième interface utilisateur et désactiver la première interface utilisateur lorsque l'appareil de cuisson est dans le deuxième mode d'utilisation.

La présence d'une deuxième interface utilisateur prévue sur la deuxième structure ainsi que d'une première interface utilisateur prévue sur la première structure permettent à l'utilisateur d'interagir d'une façon facile et ergonomique avec l'appareil de cuisson quelle que soit la position de la deuxième structure. Avantageusement également, l'interdépendance entre l'activation de la première interface utilisateur et la désactivation de la deuxième interface utilisateur permet de limiter les risques éventuels d'une interaction non-souhaitée avec l'une ou l'autre des interfaces utilisateur de l'appareil de cuisson pendant sa manipulation par exemple.

L'appareil de cuisson électrique peut en outre présenter une ou plusieurs des caractéristiques suivantes, prises seules ou en combinaison.

Selon un mode de réalisation de l'invention, la deuxième structure occupe la position d'ouverture maximale lorsque l'appareil de cuisson est dans le deuxième mode d'utilisation.

Selon un mode de réalisation de l'invention, l'appareil de cuisson est configuré de telle sorte que la première plaque de cuisson et la deuxième plaque de cuisson définissent un premier angle d'inclinaison compris entre 150 et 200°, avantageusement entre 170 et 190° et par exemple d'environ 180°, lorsque la deuxième structure occupe la position d'ouverture maximale.

Selon un mode de réalisation de l'invention, chacune des première et deuxième interfaces utilisateur est configurée pour permettre à un utilisateur de sélectionner au moins un paramètre de fonctionnement de l'appareil de cuisson.

Selon un mode de réalisation de l'invention, l'activation de la première interface utilisateur est conditionnée par la désactivation de la deuxième interface utilisateur, et réciproquement, l'activation de la deuxième interface utilisateur est conditionnée par la désactivation de la première interface utilisateur.

Selon un mode de réalisation de l'invention, la deuxième interface utilisateur et la première interface utilisateur sont configurées pour permettre à un utilisateur notamment d'allumer ou d'éteindre l'appareil de cuisson, de régler la température des premier et deuxième modules de cuisson, et/ou encore d'accéder à des programmes de cuisson automatiques.

Selon un mode de réalisation de l'invention, le premier module de cuisson et le deuxième module de cuisson comportent respectivement un premier élément chauffant et un deuxième élément chauffant.

Selon un mode de réalisation de l'invention, l'unité de commande est configurée pour activer la première interface utilisateur et désactiver la deuxième interface utilisateur lorsqu'une première condition d'activation est détectée par l'unité de commande, et pour activer la deuxième interface utilisateur et désactiver la première interface utilisateur lorsqu'une deuxième condition d'activation est détectée par l'unité de commande.

Selon un mode de réalisation de l'invention, les première et deuxième plaques de cuisson sont sensiblement parallèles lorsque la deuxième structure est en position d'ouverture maximale.

Selon un mode de réalisation de l'invention, la première interface utilisateur ainsi que la deuxième interface utilisateur peuvent présenter différentes touches ou boutons ou un écran tactile permettant d'accéder à un menu.

Selon un mode de réalisation de l'invention, l'appareil de cuisson est configuré de telle sorte que la première condition d'activation est atteinte lorsque la deuxième structure est pivotée, depuis la position d'ouverture maximale, en direction de la position de fermeture et atteint une première position prédéterminée située entre la position de fermeture et la position d'ouverture maximale, et de telle sorte que la deuxième condition d'activation est atteinte lorsque la deuxième structure est pivotée, depuis la position de fermeture, en direction de la position d'ouverture maximale et atteint une deuxième position prédéterminée située entre la position de fermeture et la position d'ouverture maximale.

Selon un mode de réalisation de l'invention, les première et deuxième positions prédéterminées sont identiques.

Selon un mode de réalisation de l'invention, les première et deuxième positions prédéterminées sont distinctes l'une de l'autre.

Selon un mode de réalisation de l'invention, la deuxième structure est apte à occuper une position d'ouverture intermédiaire qui est stable et située entre la position de fermeture et la position d'ouverture maximale.

Selon un mode de réalisation de l'invention, l'appareil de cuisson est configuré de telle sorte que la première plaque de cuisson et la deuxième plaque de cuisson définissent un deuxième angle d'inclinaison compris entre 90 et 120° lorsque la deuxième structure occupe la position d'ouverture intermédiaire.

Selon un mode de réalisation de l'invention, lorsque l'appareil de cuisson est dans le premier mode d'utilisation, la deuxième structure occupe une position située entre la position de fermeture et la position d'ouverture intermédiaire.

Selon un mode de réalisation de l'invention, les première et deuxième positions prédéterminées correspondent par exemple à une même position située à proximité de, et par exemple immédiatement après, la position d'ouverture intermédiaire, ou située à proximité de la position d'ouverture maximale.

Selon un mode de réalisation de l'invention, la deuxième structure comporte au moins un bras de liaison relié à la liaison pivot, et par exemple deux bras de liaison latéraux reliés chacun à la liaison pivot. De façon avantageuse, la poignée de préhension comporte les deux bras de liaison latéraux.

Selon un mode de réalisation de l'invention, l'appareil de cuisson comporte au moins une liaison pivot additionnelle qui est configurée pour relier le deuxième module de cuisson à l'au moins un bras de liaison et pour autoriser une rotation du deuxième module de cuisson par rapport à l'au moins un bras de liaison autour d'un axe de pivotement additionnel. Avantageusement, l'au moins une liaison pivot additionnel permet de positionner le deuxième module de cuisson selon l'orientation voulue, et en général sensiblement parallèlement au premier module de cuisson, sans être influencé par l'écartement relatif des premier et deuxième modules de cuisson, et plus particulièrement des première et deuxième plaques de cuisson.

Selon un mode de réalisation de l'invention, l'axe de pivotement additionnel est sensiblement parallèle à l'axe de pivotement.

Selon un mode de réalisation de l'invention, l'axe de pivotement est sensiblement horizontal lorsque l'appareil de cuisson repose sur une surface horizontale.

Selon un mode de réalisation de l'invention, l'appareil de cuisson comporte en outre un contact électrique configuré pour occuper un premier état lorsque l'appareil de cuisson est dans le premier mode d'utilisation, et par exemple lorsque la deuxième structure occupe une position située entre la position de fermeture et la position d'ouverture intermédiaire, et configuré pour occuper un deuxième état lorsque l'appareil de cuisson est dans le deuxième mode d'utilisation, et par exemple lorsque la deuxième structure occupe une position située entre la position d'ouverture intermédiaire et la position d'ouverture maximale.

Selon un mode de réalisation de l'invention, le contact électrique est configuré pour occuper le premier état tant que la deuxième structure occupe une position située entre la position de fermeture et la position d'ouverture intermédiaire, et pour occuper le deuxième état tant que la deuxième structure occupe une position située entre la position d'ouverture intermédiaire et la position d'ouverture maximale, à l'exclusion de la position d'ouverture intermédiaire.

Selon un mode de réalisation de l'invention, le contact électrique est un capteur tout ou rien, et par exemple un commutateur, un interrupteur à levier, un bouton poussoir ou un micro rupteur.

Selon le premier mode de réalisation de l'invention, le contact électrique est configuré pour être déplacé dans le deuxième état lorsque la deuxième structure est pivotée, depuis la position d'ouverture intermédiaire, en direction de la position d'ouverture maximale et atteint la deuxième position prédéterminée, et pour être déplacé dans le premier état lorsque la deuxième structure est pivotée, depuis une position située entre la position d'ouverture maximale et la position d'ouverture intermédiaire, en direction de la position d'ouverture intermédiaire et atteint la première position prédéterminée.

Selon un mode de réalisation de l'invention, l'appareil de cuisson comporte un dispositif d'actionnement configuré pour déplacer le contact électrique dans le premier état lorsque la deuxième structure est pivotée, depuis la position d'ouverture maximale, en direction de la position de fermeture et atteint la première position prédéterminée, et pour déplacer le contact électrique dans le deuxième état lorsque la deuxième structure est pivotée, depuis la position de fermeture, en direction de la position d'ouverture intermédiaire et atteint la deuxième position prédéterminée.

Selon un mode de réalisation de l'invention, le dispositif d'actionnement comporte un organe d'actionnement, tel qu'un doigt d'actionnement, qui est solidaire en pivotement de la deuxième structure et qui est configuré pour activer ou désactiver le contact électrique lorsque la deuxième structure atteint la première position prédéterminée et pour désactiver ou activer le contact électrique lorsque la deuxième structure atteint la deuxième position prédéterminée. Selon un tel mode de réalisation, le contact électrique peut par exemple être fixé à la première structure et être statique.

Selon un mode de réalisation de l'invention, le dispositif d'actionnement comporte un organe d'actionnement mobile, par exemple en translation, entre une position d'actionnement dans laquelle l'organe d'actionnement est configuré pour activer le contact électrique et une position de repos dans laquelle l'organe d'actionnement est configuré pour désactiver le contact électrique, et une came configurée pour déplacer l'organe d'actionnement de la position de repos à la position d'actionnement lorsque la deuxième structure atteint la première position prédéterminée ou la deuxième position prédéterminée.

Selon un mode de réalisation de l'invention, le dispositif d'actionnement est au moins en partie prévue à l'intérieur de l'un des bras de liaison latéraux. Une telle disposition permet de réduire l'encombrement de l'appareil de cuisson.

Selon un mode de réalisation de l'invention, la came est solidaire en pivotement de la deuxième structure.

Selon un autre mode de réalisation de l'invention, la came est immobile par rapport à la première structure.

Selon un mode de réalisation de l'invention, l'organe d'actionnement est monté sur la deuxième structure, et est donc monté mobile en rotation autour de l'axe de pivotement.

Selon un mode de réalisation de l'invention, l'organe d'actionnement possède une première portion d'actionnement configurée pour coopérer avec la came et une deuxième portion d'actionnement configurée pour coopérer avec le contact électrique, et plus particulièrement pour activer et désactiver le contact électrique.

Selon un mode de réalisation de l'invention, le dispositif d'actionnement comporte également un organe de sollicitation, tel qu'un ressort de rappel par exemple, configuré pour solliciter l'organe d'actionnement vers la position de repos lorsque la came est décalée angulairement par rapport à l'organe d'actionnement.

Selon un mode de réalisation de l'invention, la poignée de préhension est configurée pour être située du côté d'une face avant de la première structure lorsque la deuxième structure est dans la position de fermeture.

Selon un mode de réalisation de l'invention, la deuxième interface utilisateur est prévue sur la poignée de préhension, et par exemple sur la partie de préhension.

Selon un mode de réalisation de l'invention, la première interface utilisateur est prévue sur une face latérale de la première structure.

Selon un mode de réalisation de l'invention, l'appareil de cuisson comporte un dispositif de blocage mobile entre un état de blocage dans lequel l'amplitude de pivotement de la deuxième structure est restreinte à un pivotement entre la position de fermeture et la position d'ouverture intermédiaire, et un état de déblocage dans lequel la deuxième structure est apte à être déplacée jusqu'à la position d'ouverture maximale.

Selon un mode de réalisation de l'invention, le dispositif de blocage comporte une partie de manipulation et une partie de blocage qui sont mécaniquement reliées, la partie de manipulation étant montée mobile, par exemple en translation, entre une première position et une deuxième position, le dispositif de blocage est configuré de telle sorte qu'un déplacement de la partie de manipulation de la première position à la deuxième position entraine un déplacement de la partie de blocage dans une position de blocage correspondant à l'état de blocage du dispositif de blocage, et de telle sorte qu'un déplacement de la partie de manipulation de la deuxième position à la première position entraine un déplacement de la partie de blocage dans une position de déblocage correspondant à l'état de déblocage du dispositif de blocage.

Selon un mode de réalisation de l'invention, le dispositif de blocage comporte un contact électrique configuré pour occuper un premier état, et par exemple pour être désactivé ou activé, lorsque la partie de blocage occupe la position de blocage, et configuré pour occuper un deuxième état, et par exemple pour être activé ou désactivé, lorsque la partie de blocage occupe la position de déblocage.

Selon un mode de réalisation de l'invention, la partie de blocage est configurée pour être maintenue dans la position de déblocage tant que la deuxième structure occupe une position située entre la position d'ouverture intermédiaire et la position d'ouverture maximale, à l'exclusion de la position d'ouverture intermédiaire.

Selon un mode de réalisation de l'invention, l'appareil de cuisson est configuré de telle sorte que la première condition d'activation est atteinte lorsque la partie de blocage est déplacée dans la position de déblocage, et de telle sorte que la deuxième condition d'activation est atteinte lorsque la partie de blocage est déplacée dans la position de blocage.

Selon un mode de réalisation de l'invention, la partie de blocage est automatiquement déplacée dans la position de déblocage lorsque la deuxième structure est pivotée, depuis une position située entre la position d'ouverture maximale et la position d'ouverture intermédiaire, en direction de la position d'ouverture intermédiaire et atteint la position d'ouverture intermédiaire.

Selon un mode de réalisation de l'invention, la partie de manipulation est prévue sur l'au moins un bras de liaison de la deuxième structure.

Selon un mode de réalisation de l'invention, le dispositif d'actionnement est formé au moins en partie par le dispositif de blocage.

Selon un mode de réalisation de l'invention, la deuxième structure comporte une poignée de préhension configurée pour être manipulée par un utilisateur, la deuxième interface utilisateur étant prévue sur la poignée de préhension.

Selon un mode de réalisation de l'invention, lorsque la première structure repose sur une surface horizontale et que la deuxième structure occupe la position d'ouverture maximale, la poignée de préhension est en contact avec ladite surface horizontale.

Selon un mode de réalisation de l'invention, la poignée de préhension est configurée pour supporter le deuxième module de cuisson.

Selon un mode de réalisation de l'invention, la première plaque de cuisson est configurée pour être inclinée vers le bas et vers une face avant de la première structure lorsque l'appareil de cuisson repose sur une surface horizontale.

Selon un mode de réalisation de l'invention, la deuxième plaque de cuisson est configurée pour être inclinée vers le bas et vers la face avant de la première structure lorsque l'appareil de cuisson repose sur une surface horizontale et que la deuxième structure est en position d'ouverture maximale.

Selon un mode de réalisation de l'invention, l'appareil de cuisson comporte en outre un bac de collecte de jus de cuisson configuré pour collecter des jus de cuisson provenant au moins de la première plaque de cuisson, le bac de collecte de jus de cuisson étant disposé au moins en partie sous le premier module de cuisson.

Selon un mode de réalisation de l'invention, la première plaque de cuisson comporte une partie de déversement frontale qui est prévue sur un bord avant de la première plaque de cuisson et qui est située verticalement à l'aplomb d'une partie avant du bac de collecte de jus de cuisson, la partie de déversement frontale étant configurée pour permettre un écoulement par gravité des jus de cuisson provenant de la première plaque de cuisson dans le bac de collecte de jus de cuisson. Une telle configuration de la première plaque de cuisson, associée à une inclinaison vers le bas et vers l'avant de la première plaque de cuisson, permet de générer un écoulement des jus de cuisson, présents sur la première plaque de cuisson, en direction du bac de collecte de jus de cuisson lorsque l'appareil de cuisson repose sur une surface d'appui qui est sensiblement horizontale. Ces dispositions limite l'émission de fumées et assure un dégagement des vapeurs brûlantes à l'arrière de l'appareil de cuisson, et donc à distance d'un utilisateur.

Selon un mode de réalisation de l'invention, la deuxième plaque de cuisson comporte une partie de déversement additionnelle qui est prévue sur un bord transversal de la deuxième plaque de cuisson et qui est configurée pour être située verticalement à l'aplomb d'une partie arrière du bac de collecte de jus de cuisson lorsque la deuxième structure est en position d'ouverture maximale, la partie de déversement additionnelle est configurée pour permettre un écoulement par gravité des jus de cuisson provenant de la deuxième plaque de cuisson dans le bac de collecte de jus de cuisson lorsque la deuxième structure est en position d'ouverture maximale. Une telle configuration de la deuxième plaque de cuisson, associée à une inclinaison vers le bas et vers l'avant de la deuxième plaque de cuisson lorsque la deuxième structure occupe la position d'ouverture maximale, permet de générer un écoulement des jus de cuisson, présents sur la deuxième plaque de cuisson, en direction du bac de collecte de jus de cuisson lorsque l'appareil de cuisson repose sur une surface d'appui qui est sensiblement horizontale et est utilisé en configuration de barbecue.

Selon un mode de réalisation de l'invention, le bac de collecte de jus de cuisson est amovible.

Selon un mode de réalisation de l'invention, l'appareil de cuisson comporte un dispositif de détection de position configuré pour détecter les modes d'utilisation, le dispositif de détection de position étant un capteur angulaire tel qu'un potentiomètre par exemple.

### Brève description des figures

La présente invention sera bien comprise à l'aide de la description qui suit en références aux figures annexées, dans lesquelles des signes de références identiques correspondent à des éléments structurellement et / ou fonctionnellement identiques ou similaires.
[Fig 1] est une vue en perspective de côté d'un appareil de cuisson selon un premier mode de réalisation de l'invention en configuration grill ;
[Fig 2] est une vue en perspective de côté de l'appareil de cuisson de la figure 1 en configuration barbecue ;
[Fig 3] est une vue en coupe longitudinale de l'appareil de cuisson de la figure 1 dans une position de fermeture ;
[Fig 4] est une vue partielle en coupe longitudinale de l'appareil de cuisson de la figure 1 dans une position d'ouverture maximale ;
[Fig 5] est une vue schématique de côté d'un appareil de cuisson selon un deuxième mode de réalisation de l'invention et dans une position de fermeture ;
[Fig 6] est une vue schématique de côté de l'appareil de cuisson de la figure 5 dans en position d'ouverture maximale ;
[Fig 7] est une vue schématique de côté d'un appareil de cuisson selon un troisième mode de réalisation de l'invention et en position de fermeture ;
[Fig 8] est une vue schématique de côté de l'appareil de cuisson de la figure 7 en position d'ouverture maximale.

### Description détaillée

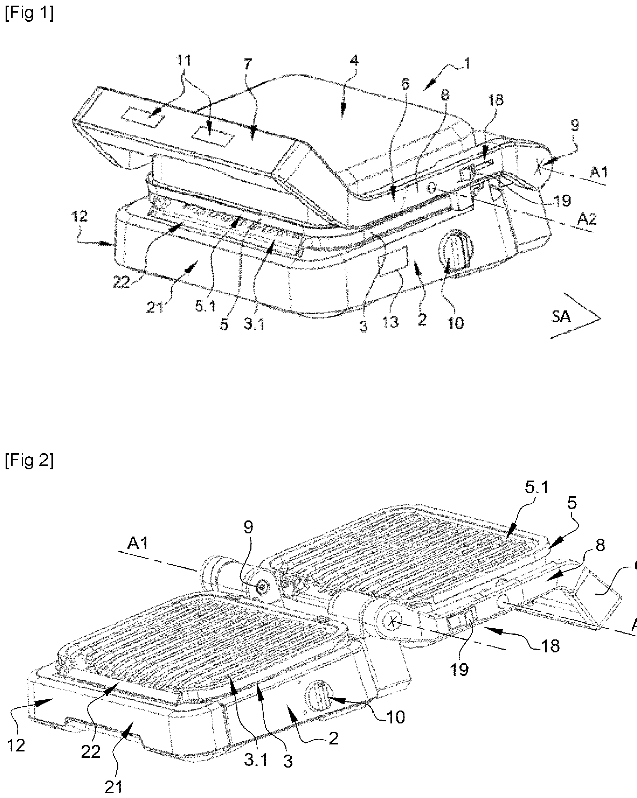

Les figures 1 à 4 représentent un appareil de cuisson 1 selon un premier mode de réalisation de l'invention. L'appareil de cuisson 1 est configuré pour la cuisson d'aliments, tels que de la viande, du poisson, des légumes ou d'autres produits alimentaires.

L'appareil de cuisson 1 comporte une première structure 2 qui comprend un premier module de cuisson 3 qui comporte lui-même une première plaque de cuisson 3.1 et un premier élément chauffant (non visible sur les figures) configuré pour chauffer la première plaque de cuisson 3.1, et une deuxième structure 4 qui comprend un deuxième module de cuisson 5 qui comporte lui-même une deuxième plaque de cuisson 5.1 et un deuxième élément chauffant (non visible sur les figures) configuré pour chauffer la deuxième plaque de cuisson 5.1.

L'appareil de cuisson 1 présente un premier mode d'utilisation, dit mode grill, dans lequel un aliment est destiné à être enserré et cuit entre les première et deuxième plaques de cuisson 3.1, 5.1, et un deuxième mode d'utilisation, dit mode barbecue, dans lequel chacune des première et deuxième plaques de cuisson 3.1, 5.1 est apte à supporter et cuire un aliment respectif, c'est-à-dire dans lequel chacune des première et deuxième plaques de cuisson 3.1, 5.1 est opérationnelle. La deuxième structure 4 comporte également une poignée de préhension 6 comportant une partie de préhension 7 configurée pour être manipulée par un utilisateur, ainsi que deux bras de liaison latéraux 8. La poignée de préhension 6 est avantageusement configurée pour supporter le deuxième module de cuisson 5 et présente une forme de U.

La deuxième structure 4 est reliée à la première structure 2 par une liaison pivot 9 qui définit un axe de pivotement A1. La liaison pivot 9 est configurée de telle sorte que la deuxième structure 4 est montée articulée par rapport à la première structure 2 et est déplaçable entre une position de fermeture dans laquelle la première plaque de cuisson 3.1 et la deuxième plaque de cuisson 5.1 présentent un écartement minimal, et par exemple sont en contact l'une avec l'autre, et une position d'ouverture maximale dans laquelle la première plaque de cuisson 3.1 et la deuxième plaque de cuisson 5.1 présentent un écartement maximal et définissent un premier angle d'inclinaison compris entre 150 et 200°, et avantageusement entre 170 et 190°.

De façon avantageuse, la deuxième structure 4 est configurée pour occuper :
- une position d'ouverture intermédiaire qui est stable et située entre la position de fermeture et la position d'ouverture maximale et dans laquelle la première plaque de cuisson 3.1 et la deuxième plaque de cuisson 5.1 définissent un deuxième angle d'inclinaison compris entre 90 et 120°, et
- une pluralité de positions de cuisson situées entre la position de fermeture et la position d'ouverture intermédiaire et dans chacune desquelles un aliment peut être enserré entre la première plaque de cuisson 3.1 et la deuxième plaque de cuisson 5.1.

Avantageusement, les première et deuxième plaques de cuisson 3.1, 5.1 sont sensiblement parallèles lorsque la deuxième structure 4 est en position d'ouverture maximale, ceci afin de proposer à l'utilisateur une utilisation de l'appareil de cuisson 1 qui est assimilable à un barbecue électrique.

Pour des raisons évidentes de praticité, la première structure 2 comprend des pieds configurés pour reposer sur une surface d'appui SA plane, tel qu'un plan de travail.

Selon le premier mode de réalisation de l'invention, la deuxième structure 4 comporte une liaison pivot additionnelle 24 qui est configurée pour relier le deuxième module de cuisson 5 aux bras de liaison latéraux 8 et pour autoriser une rotation du deuxième module de cuisson 5 par rapport aux bras de liaison latéraux 8 autour d'un axe de pivotement additionnel A2 qui est sensiblement parallèle à l'axe de pivotement A1. Avantageusement, la liaison pivot additionnelle 24 permet de positionner le deuxième module de cuisson 5 selon l'orientation voulue, et en général sensiblement parallèlement au premier module de cuisson 3 lorsque la deuxième structure 4 est dans l'une des positions de cuisson. En d'autres termes, le deuxième module de cuisson 5 est monté pivotant par rapport à la poignée de préhension 6. De façon avantageuse, la partie de préhension 7 de la poignée de préhension 6 est configurée pour être en contact avec la surface d'appui SA lorsque la deuxième structure 4 occupe la position d'ouverture maximale.

Selon le premier mode de réalisation de l'invention tel que présenté sur les figures 1 à 4, l'appareil de cuisson 1 comporte également une première interface utilisateur 10 qui est prévue sur la première structure 2 et qui est configurée pour permettre à un utilisateur de sélectionner au moins un paramètre de fonctionnement de l'appareil de cuisson 1. Avantageusement, la première interface utilisateur 10 est prévue sur une face latérale de la première structure 2.

L'appareil de cuisson 1 comporte également une deuxième interface utilisateur 11 qui est prévue sur la deuxième structure 4 et qui est également configurée pour permettre à un utilisateur de sélectionner au moins un paramètre de fonctionnement de l'appareil de cuisson 1. Avantageusement, la deuxième interface utilisateur 11 est prévue sur la partie de préhension 7 afin de faciliter l'accès par l'utilisateur lorsque la deuxième structure 4 est dans l'une des positions de cuisson ou dans la position de fermeture.

Avantageusement, la première interface utilisateur 10 est dédiée au premier mode d'utilisation et la deuxième interface utilisateur 11 est dédiée au deuxième mode d'utilisation.

La première interface utilisateur 10 ainsi que la deuxième interface utilisateur 11 peuvent présenter différentes touches ou boutons ou encore un écran tactile permettant d'accéder à un menu. La deuxième interface utilisateur 11 et la première interface utilisateur 10 sont notamment configurées pour permettre à un utilisateur d'allumer ou d'éteindre l'appareil de cuisson 1, de régler la température des premier et deuxième modules de cuisson 3, 5, ou encore d'accéder à des programmes de cuisson automatiques.

L'appareil de cuisson 1 comporte également une unité de commande 13 configurée pour commander le fonctionnement de l'appareil de cuisson 1. Avantageusement, l'unité de commande 13 est configurée pour activer la première interface utilisateur 10 et désactiver la deuxième interface utilisateur 11 lorsque l'appareil de cuisson 1 est dans le premier mode d'utilisation, et pour activer la deuxième interface utilisateur 11 et désactiver la première interface 10 utilisateur lorsque l'appareil de cuisson 1 est dans le deuxième mode d'utilisation.

L'unité de commande 13 est plus particulièrement configurée pour activer la première interface utilisateur 10 et désactiver la deuxième interface utilisateur 11 lorsqu'une première condition d'activation est détectée par l'unité de commande 13, et pour activer la deuxième interface utilisateur 11 et désactiver la première interface utilisateur 10 lorsqu'une deuxième condition d'activation est détectée par l'unité de commande 13. Les première et deuxième conditions d'activation sont définies de telle sorte que la première interface utilisateur 10 et la deuxième interface utilisateur 11 sont respectivement activée et désactivée lorsque l'appareil de cuisson 1 est dans le premier mode d'utilisation, et de telle sorte que la première interface utilisateur 10 et la deuxième interface utilisateur 11 sont respectivement désactivée et activée lorsque l'appareil de cuisson 1 est dans le deuxième mode d'utilisation.

Par ailleurs, l'appareil de cuisson 1 est configuré de telle sorte que la première condition d'activation est atteinte lorsque la deuxième structure 4 est pivotée, depuis la position d'ouverture maximale, en direction de la position d'ouverture intermédiaire et atteint une première position prédéterminée située entre la position d'ouverture intermédiaire et la position d'ouverture maximale, et de telle sorte que la deuxième condition d'activation est atteinte lorsque la deuxième structure 4 est pivotée, depuis la position d'ouverture intermédiaire, en direction de la position d'ouverture maximale et atteint une deuxième position prédéterminée située entre la position d'ouverture intermédiaire et la position d'ouverture maximale.

Selon le premier mode de réalisation de l'invention, les première et deuxième positions prédéterminées sont adjacentes et situées à proximité de la position d'ouverture maximale. Par exemple, la deuxième position prédéterminée pourrait être la position d'ouverture maximale, de telle sorte que la deuxième condition d'activation serait détectée par l'unité de commande 13 uniquement lorsque la deuxième structure 4 atteint la position d'ouverture maximale et la première position prédéterminée pourrait être située immédiatement avant la position d'ouverture maximale, de telle sorte que la première condition d'activation serait détectée par l'unité de commande 13 dès que la deuxième structure 4 quitte la position d'ouverture maximale. Selon une variante de réalisation de l'invention, il est envisageable que les première et deuxième positions prédéterminées soient éloignées l'une de l'autre ou soient situées à proximité de la position d'ouverture intermédiaire.

Avantageusement, la présence d'une deuxième interface utilisateur 11 prévue sur la deuxième structure 4, et plus particulièrement sur la partie de préhension 7 de la poignée de préhension 6, ainsi que d'une première interface utilisateur 10 prévue sur la première structure 2 permettent à l'utilisateur d'accéder et d'interagir facilement et de manière ergonomique avec l'appareil de cuisson 1 quelle que soit la position de la deuxième structure 4. Avantageusement également, l'interdépendance entre l'activation de la première interface utilisateur 10 et la désactivation de la deuxième interface utilisateur 11 permet de limiter les risques éventuelles d'une interaction non-souhaitée avec l'une ou l'autre des interfaces utilisateur de l'appareil de cuisson 1 pendant sa manipulation par exemple.

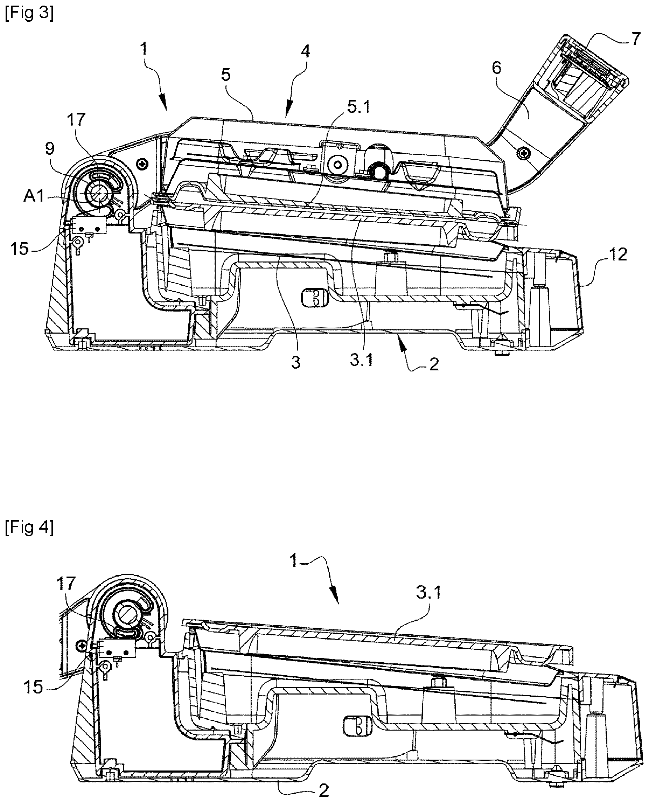

Comme visible plus spécifiquement sur les figures 3 et 4, l'appareil de cuisson 1 comporte en outre un contact électrique 15, tel qu'un micro rupteur, configuré pour occuper un premier état, et par exemple pour être désactivé ou activé, lorsque l'appareil de cuisson 1 est dans le premier mode d'utilisation, et configuré pour occuper un deuxième état, et par exemple pour être activé ou désactivé, lorsque l'appareil de cuisson 1 est dans le deuxième mode d'utilisation.

Selon le premier mode de réalisation de l'invention, le contact électrique 15 est configuré pour être déplacé dans le deuxième état lorsque la deuxième structure 4 est pivotée, depuis la position d'ouverture intermédiaire, en direction de la position d'ouverture maximale et atteint la deuxième position prédéterminée, et pour être déplacé dans le premier état lorsque la deuxième structure 4 est pivotée, depuis une position située entre la position d'ouverture maximale et la position d'ouverture intermédiaire, en direction de la position d'ouverture intermédiaire et atteint la première position prédéterminée.

De façon avantageuse, le contact électrique 15 est configuré pour occuper le premier état au minimum lorsque la deuxième structure 4 occupe une position située entre la position de fermeture et la position d'ouverture intermédiaire, et pour occuper le deuxième état au minimum lorsque la deuxième structure 4 occupe la position d'ouverture maximale. Selon une variante de réalisation de l'invention, le contact électrique 15 pourrait être configuré pour occuper le premier état tant que la deuxième structure 4 occupe une position située entre la position de fermeture et la position d'ouverture intermédiaire, et pour occuper le deuxième état tant que la deuxième structure 4 occupe une position située entre la position d'ouverture intermédiaire et la position d'ouverture maximale, à l'exclusion de la position d'ouverture intermédiaire.

Selon le premier mode de réalisation de l'invention, le contact électrique 15 est statique et est disposé dans la première structure 2, et par exemple à proximité de la liaison pivot 9.

L'appareil de cuisson 1 comporte également un dispositif d'actionnement configuré pour déplacer le contact électrique 15 dans le premier état lorsque la deuxième structure 4 est pivotée, depuis la position d'ouverture maximale, en direction de la position de fermeture et atteint la première position prédéterminée, et pour déplacer le contact électrique 15 dans le deuxième état lorsque la deuxième structure 4 est pivotée, depuis la position de fermeture, en direction de la position d'ouverture maximale et atteint la deuxième position prédéterminée.

Selon le premier mode de réalisation de l'invention, le dispositif d'actionnement comporte un organe d'actionnement 17, tel qu'un doigt d'actionnement, qui est solidaire en pivotement de la deuxième structure 4 et qui est configuré pour activer le contact électrique 15 lorsque la deuxième structure 4 atteint sensiblement la position d'ouverture maximale et pour désactiver le contact électrique 15 lorsque la deuxième structure 4 s'éloigne légèrement de la position d'ouverture maximale.

Avantageusement, l'appareil de cuisson 1 comprend un dispositif de blocage 18 qui est mobile entre un état de blocage dans lequel l'amplitude de pivotement de la deuxième structure 4 est restreinte à un pivotement entre la position de fermeture et la position d'ouverture intermédiaire, et un état de déblocage dans lequel la deuxième structure 4 est apte à être déplacée jusque la position d'ouverture maximale, et est donc mobile entre la position de fermeture et la position d'ouverture maximale. Avantageusement, l'état de blocage du dispositif de blocage 18 permet de maintenir dans une position stable la deuxième structure 4 lorsqu'elle est en position d'ouverture intermédiaire.

Selon le premier mode de réalisation de l'invention, le dispositif de blocage 18 comporte une partie de blocage qui est mécaniquement reliée à une partie de manipulation 19 qui est prévue sur l'un des bras de liaison latéraux 8 de la poignée de préhension, de manière à être accessible par l'utilisateur. La partie de manipulation 19 est mobile en translation entre une première position et une deuxième position. Le dispositif de blocage 18 est configuré de telle sorte qu'un déplacement de la partie de manipulation 19 de la première position à la deuxième position entraine un déplacement de la partie de blocage dans une position de blocage correspondant à l'état de blocage du dispositif de blocage 18, et de telle sorte qu'un déplacement de la partie de manipulation 19 de la deuxième position à la première position entraine un déplacement de la partie de blocage dans une position de déblocage correspondant à l'état de déblocage du dispositif de blocage 18. De façon avantageuse, l'appareil de cuisson 1 est configuré de telle sorte que la partie de manipulation 19 est maintenue dans la première position lorsque la deuxième structure 4 est déplacée entre la position d'ouverture intermédiaire et la position d'ouverture maximale.

Toujours selon le premier mode de réalisation de l'invention, l'appareil de cuisson 1 comporte en outre un bac de collecte de jus de cuisson 21 qui est configuré pour collecter des jus de cuisson provenant des premier et deuxième modules de cuisson 3, 5. Le bac de collecte de jus de cuisson 21 est disposé sous le premier module de cuisson 3. Le bac de collecte de jus de cuisson 21 peut par exemple être amovible de manière à pouvoir être vidé et nettoyé.

Selon le premier mode de réalisation de l'invention, la première plaque de cuisson 3.1 comporte une partie de déversement frontale 22 qui est prévue sur un bord avant de la première plaque de cuisson 3.1 et qui est située verticalement à l'aplomb d'une partie avant du bac de collecte de jus de cuisson 21. La partie de déversement frontale 22 est plus particulièrement configurée pour permettre un écoulement par gravité des jus de cuisson provenant de la première plaque de cuisson 3.1 dans le bac de collecte de jus de cuisson 21.

De façon avantageuse, la deuxième plaque de cuisson 5.1 comporte une partie de déversement additionnelle 23 qui est prévue sur un bord transversal de la deuxième plaque de cuisson 5.1 et qui est configurée pour être située verticalement à l'aplomb d'une partie arrière du bac de collecte de jus de cuisson 21 lorsque la deuxième structure 4 est en position d'ouverture maximale. La partie de déversement additionnelle 23 est configurée pour permettre un écoulement par gravité des jus de cuisson provenant de la deuxième plaque de cuisson 5.1 dans le bac de collecte de jus de cuisson 21 lorsque la deuxième structure 4 est en position d'ouverture maximale.

Avantageusement, la première plaque de cuisson 3.1 est configurée pour être inclinée vers le bas et vers une face avant 12 de la première structure 2 lorsque l'appareil de cuisson 1 repose sur une surface horizontale, et la deuxième plaque de cuisson 5.1 est également configurée pour être inclinée vers le bas et vers la face avant 12 de la première structure 2 lorsque l'appareil de cuisson 1 repose sur une surface horizontale et que la deuxième structure 4 est en position d'ouverture maximale. Une telle inclinaison des première et deuxième plaque de cuisson 3.1, 5.1 permet de générer un écoulement des jus de cuisson en direction du bac de collecte de jus de cuisson 21 lorsque l'appareil de cuisson 1 repose sur une surface d'appui SA qui est sensiblement horizontale.

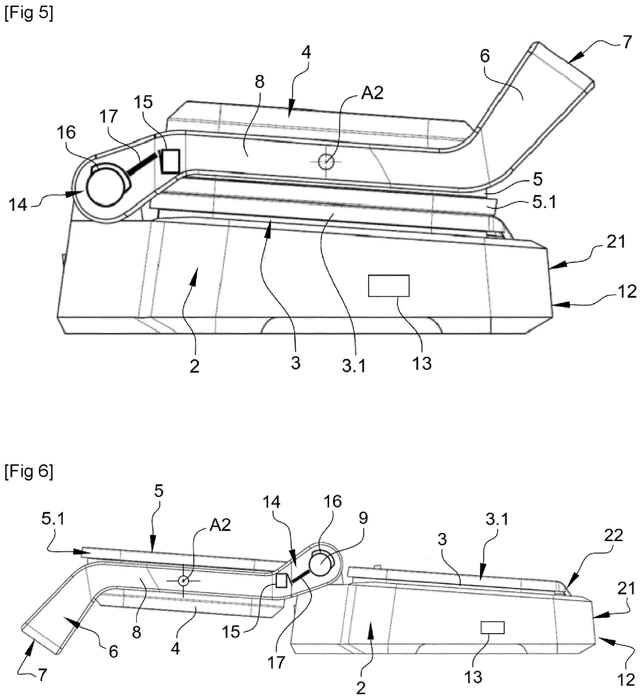

Les figures 5 et 6 représentent un appareil de cuisson 1 qui diffère du première mode de réalisation représenté sur les figures 1 à 4 essentiellement en ce que les première et deuxième positions prédéterminées sont identiques et situées à proximité de la position d'ouverture intermédiaire, et par exemple immédiatement après la position d'ouverture intermédiaire en direction de la position d'ouverture maximale, et en ce que le dispositif d'actionnement comporte une came 16 et un organe d'actionnement 17 mobile, par exemple en translation, entre une position d'actionnement dans lequel l'organe d'actionnement 17 est configuré pour activer le contact électrique 15 et une position de repos dans lequel l'organe d'actionnement 17 est configuré pour désactiver le contact électrique 15. La came 16 est plus particulièrement configurée pour déplacer l'organe d'actionnement 17 de la position de repos à la position d'actionnement lorsque la deuxième structure 4 est pivotée, depuis une position située entre la position d'ouverture maximale et la position d'ouverture intermédiaire, en direction de la position d'ouverture intermédiaire et atteint sensiblement la position d'ouverture intermédiaire.

De façon avantageuse, le dispositif d'actionnement comporte un organe de sollicitation (non représenté sur les figures), tel qu'un ressort de rappel, configuré pour solliciter l'organe d'actionnement 17 dans la position de repos lorsque la came 16 est décalée angulairement par rapport à l'organe d'actionnement 17.

Selon le deuxième mode de réalisation de l'invention, la came 16 est immobile par rapport à la première structure 2 et comporte une surface de came qui est en arc de cercle et qui est coaxiale avec l'axe de pivotement A1, et l'organe d'actionnement 17 est monté sur la deuxième structure 4, et est par exemple logé dans l'un des bras de liaison latéraux 8. De façon avantageuse, le contact électrique 15 est également logé dans l'un des bras de liaison latéraux 8.

L'organe d'actionnement 17 possède une première portion d'actionnement, par exemple formée par une première extrémité de l'organe d'actionnement 17, configurée pour coopérer avec la came 16, et une deuxième portion d'actionnement, par exemple formée par une deuxième extrémité de l'organe d'actionnement 17, configurée pour coopérer avec le contact électrique 15, et plus particulièrement pour activer et désactiver le contact électrique 15. Avantageusement, lors du déplacement de la deuxième structure 4 entre la position de fermeture et la position d'ouverture intermédiaire, la came 16 coopère avec l'organe d'actionnement 17 et le maintien dans sa position d'actionnement ; à l'inverse, lors du déplacement de la deuxième structure 4 entre la position d'ouverture intermédiaire et la position d'ouverture maximale, la came 16 libère l'organe d'actionnement 17 et ce dernier est sollicité vers la position de repos par l'organe de sollicitation.

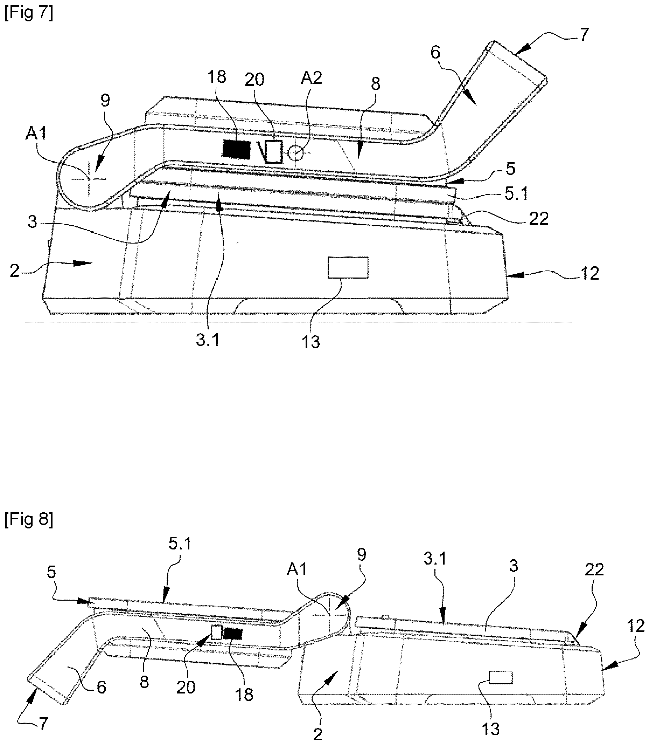

Les figures 7 et 8 représentent un appareil de cuisson 1 selon un troisième mode de réalisation de l'invention qui diffère du deuxième mode de réalisation notamment en ce que le dispositif de blocage 18 comporte également un contact électrique 20, tel qu'un micro rupteur, configuré pour occuper un premier état, et par exemple pour être désactivé ou activé, lorsque la partie de blocage occupe la position de blocage, et configuré pour occuper un deuxième état, et par exemple pour être activé ou désactivé, lorsque la partie de blocage occupe la position de déblocage. De façon avantageuse, la partie de blocage est configurée pour être maintenue dans la position de déblocage tant que la deuxième structure 4 occupe une position située entre la position d'ouverture intermédiaire et la position d'ouverture maximale, à l'exclusion de la position d'ouverture intermédiaire.

Ainsi, selon ce troisième mode de réalisation de l'invention, l'appareil de cuisson 1 est configuré de telle sorte que la première condition d'activation est atteinte lorsque la partie de blocage est déplacée dans la position de déblocage, c'est-à-dire lorsque la partie de manipulation 19 est déplacée dans la première position et que le contact électrique 20 est activé, et de telle sorte que la deuxième condition d'activation est atteinte lorsque la partie de blocage est déplacée dans la position de blocage, c'est-à-dire lorsque la partie de manipulation 19 est déplacée dans la deuxième position et que le contact électrique 20 est désactivé.

Selon un mode de réalisation de l'invention non représenté sur les figures, l'appareil de cuisson 1 pourrait comporter un dispositif de détection de position, tel un potentiomètre linéaire ou rotatif par exemple, et le dispositif de détection de position pourrait être configuré pour piloter les premier et deuxième modes d'utilisation en fonction de valeurs provenant du dispositif de détection de position.

Bien entendu, la présente invention n'est nullement limitée aux modes de réalisation décrits et illustrés qui n'ont été donnés qu'à titres d'exemples.

## Revendications

1. Appareil de cuisson (1) pour la cuisson de produits alimentaires, l'appareil de cuisson (1) comportant :
- une première structure (2) comportant un premier module de cuisson (3) comportant une première plaque de cuisson (3.1),
- une deuxième structure (4) comportant un deuxième module de cuisson (5) comportant une deuxième plaque de cuisson (5.1),
- une liaison pivot (9) reliant la deuxième structure (4) à la première structure (2) et configurée pour permettre un pivotement de la deuxième structure (4) par rapport à la première structure (2) autour d'un axe de pivotement (A1) et entre une position de fermeture dans laquelle la première plaque de cuisson (3.1) et la deuxième plaque de cuisson (5.1) présentent un écartement minimal, et une position d'ouverture maximale dans laquelle la première plaque de cuisson (3.1) et la deuxième plaque de cuisson (5.1) présentent un écartement maximal lorsque l'appareil de cuisson (1) repose sur une surface d'appui (SA) qui est horizontale,
- une première interface utilisateur (10) disposée sur la première structure (2),
- une unité de commande (13) configurée pour commander le fonctionnement de l'appareil de cuisson (1),
l'appareil de cuisson (1) présentant un premier mode d'utilisation, dit mode grill, dans lequel un aliment est destiné à être enserré entre les première et deuxième plaques de cuisson (3.1, 5.1), et un deuxième mode d'utilisation, dit mode barbecue, dans lequel chacune des première et deuxième plaques de cuisson (3.1, 5.1) est apte à supporter et cuire un aliment respectif,
l'appareil de cuisson (1) comportant une deuxième interface utilisateur (11) disposée sur la deuxième structure (4),
**caractérisé en ce que** la première interface utilisateur (10) est dédiée au premier mode d'utilisation et la deuxième interface utilisateur (11) est dédiée au deuxième mode d'utilisation, et **en ce que** l'unité de commande (13) est configurée pour activer la première interface utilisateur (10) et désactiver la deuxième interface utilisateur (11) lorsque l'appareil de cuisson est dans le premier mode d'utilisation, et pour activer la deuxième interface utilisateur (11) et désactiver la première interface utilisateur (10) lorsque l'appareil de cuisson (1) est dans le deuxième mode d'utilisation.

2. Appareil de cuisson (1) selon la revendication 1, dans lequel l'unité de commande (13) est configurée pour activer la première interface utilisateur (10) et désactiver la deuxième interface utilisateur (11) lorsqu'une première condition d'activation est détectée par l'unité de commande (13), et pour activer la deuxième interface utilisateur (11) et désactiver la première interface utilisateur (10) lorsqu'une deuxième condition d'activation est détectée par l'unité de commande (13).

3. Appareil de cuisson (1) selon la revendication 2, lequel est configuré de telle sorte que la première condition d'activation est atteinte lorsque la deuxième structure (4) est pivotée, depuis la position d'ouverture maximale, en direction de la position de fermeture et atteint une première position prédéterminée située entre la position de fermeture et la position d'ouverture maximale, et de telle sorte que la deuxième condition d'activation est atteinte lorsque la deuxième structure (4) est pivotée, depuis la position de fermeture, en direction de la position d'ouverture maximale et atteint une deuxième position prédéterminée située entre la position de fermeture et la position d'ouverture maximale.

4. Appareil de cuisson (1) selon la revendication 3, dans lequel les première et deuxième positions prédéterminées sont identiques.

5. Appareil de cuisson (1) selon l'une quelconque des revendications précédentes, dans lequel la deuxième structure (4) est apte à occuper une position d'ouverture intermédiaire qui est stable et située entre la position de fermeture et la position d'ouverture maximale.

6. Appareil de cuisson (1) selon la revendication 5, lequel comporte un dispositif de blocage (18) mobile entre un état de blocage dans lequel l'amplitude de pivotement de la deuxième structure (4) est restreinte à un pivotement entre la position de fermeture et la position d'ouverture intermédiaire, et un état de déblocage dans lequel la deuxième structure (4) est apte à être déplacée jusqu'à la position d'ouverture maximale.

7. Appareil de cuisson (1) selon la revendication 6, dans lequel le dispositif de blocage (18) comporte une partie de manipulation (19) et une partie de blocage qui sont mécaniquement reliées, la partie de manipulation (19) étant montée mobile entre une première position et une deuxième position, le dispositif de blocage (18) est configuré de telle sorte qu'un déplacement de la partie de manipulation (19) de la première position à la deuxième position entraine un déplacement de la partie de blocage dans une position de blocage correspondant à l'état de blocage du dispositif de blocage (18), et de telle sorte qu'un déplacement de la partie de manipulation (19) de la deuxième position à la première position entraine un déplacement de la partie de blocage dans une position de déblocage correspondant à l'état de déblocage du dispositif de blocage (18).

8. Appareil de cuisson (1) selon l'une quelconque des revendications précédentes, lequel comporte en outre un contact électrique (15) configuré pour occuper un premier état lorsque l'appareil de cuisson (1) est dans le premier mode d'utilisation, et configuré pour occuper un deuxième état lorsque l'appareil de cuisson (1) est dans le deuxième mode d'utilisation.

9. Appareil de cuisson (1) selon les revendications 3 et 8, lequel comporte un dispositif d'actionnement configuré pour déplacer le contact électrique (15) dans le premier état lorsque la deuxième structure (4) est pivotée, depuis la position d'ouverture maximale, en direction de la position de fermeture et atteint la première position prédéterminée, et pour déplacer le contact électrique (15) dans le deuxième état lorsque la deuxième structure (4) est pivotée, depuis la position de fermeture, en direction de la position d'ouverture intermédiaire et atteint la deuxième position prédéterminée.

10. Appareil de cuisson (1) selon la revendication 9, dans lequel le dispositif d'actionnement comporte :
- un organe d'actionnement (17) mobile entre une position d'actionnement dans laquelle l'organe d'actionnement (17) est configuré pour activer le contact électrique (15) et une position de repos dans laquelle l'organe d'actionnement (17) est configuré pour désactiver le contact électrique (15), et
- une came (16) configurée pour déplacer l'organe d'actionnement (17) de la position de repos à la position d'actionnement lorsque la deuxième structure (4) atteint la première position prédéterminée ou la deuxième position prédéterminée.

11. Appareil de cuisson (1) selon la revendication 9 en combinaison avec la revendication 6 ou 7, dans lequel le dispositif d'actionnement est formé au moins en partie par le dispositif de blocage (18).

12. Appareil de cuisson (1) selon l'une quelconque des revendications précédentes, dans lequel la deuxième structure (4) comporte une poignée de préhension (6) configurée pour être manipulée par un utilisateur, la deuxième interface utilisateur (11) étant prévue sur la poignée de préhension (6).

13. Appareil de cuisson (1) selon la revendication 12, dans lequel, lorsque la première structure (2) repose sur une surface horizontale et que la deuxième structure (4) occupe la position d'ouverture maximale, la poignée de préhension (6) est en contact avec ladite surface horizontale.

14. Appareil de cuisson (1) selon l'une quelconque des revendications précédentes, dans lequel la première plaque de cuisson (3.1) est configurée pour être inclinée vers le bas et vers une face avant (12) de la première structure (2) lorsque l'appareil de cuisson (1) repose sur une surface horizontale.

15. Appareil de cuisson (1) selon l'une quelconque des revendications précédentes, lequel comporte en outre un bac de collecte de jus de cuisson (21) configuré pour collecter des jus de cuisson provenant au moins de la première plaque de cuisson (3.1), le bac de collecte de jus de cuisson (21) étant disposé au moins en partie sous le premier module de cuisson (3).

16. Appareil de cuisson (1) selon la revendication précédente, dans lequel la première plaque de cuisson (3.1) comporte une partie de déversement frontale (22) qui est prévue sur un bord avant de la première plaque de cuisson (3.1) et qui est située verticalement à l'aplomb d'une partie avant du bac de collecte de jus de cuisson (21), la partie de déversement frontale (22) étant configurée pour permettre un écoulement par gravité des jus de cuisson provenant de la première plaque de cuisson (3.1) dans le bac de collecte de jus de cuisson (21).

17. Appareil de cuisson (1) selon l'une quelconque des revendications précédentes, dans lequel la première interface utilisateur (10) est disposée sur une face latérale de la première structure (2).

## Patentansprüche

1. Kochgerät (1) zum Kochen von Lebensmitteln, wobei das Kochgerät (1) umfasst:
- eine erste Struktur (2), die ein erstes Kochmodul (3) umfasst, das eine erste Kochplatte (3.1) umfasst,
- eine zweite Struktur (4), die ein zweites Kochmodul (5) umfasst, das eine zweite Kochplatte (5.1) umfasst,
- eine Schwenkverbindung (9), die die zweite Struktur (4) mit der ersten Struktur (2) verbindet und so konfiguriert ist, dass sie ein Schwenken der zweiten Struktur (4) in Bezug auf die erste Struktur (2) um eine Schwenkachse (A1) und zwischen einer Schließposition, in der die erste Kochplatte (3.1) und die zweite Kochplatte (5.1) einen minimalen Abstand aufweisen, und einer maximalen Öffnungsposition ermöglicht, in der die erste Kochplatte (3.1) und die zweite Kochplatte (5.1) einen maximalen Abstand aufweisen, wenn das Kochgerät (1) auf einer Auflagefläche (SA) ruht, die horizontal ist,
- eine erste Benutzerschnittstelle (10), die an der ersten Struktur (2) angeordnet ist,
- eine Steuereinheit (13), die so konfiguriert ist, dass sie den Betrieb des Kochgeräts (1) steuert,
wobei das Kochgerät (1) einen ersten Betriebsmodus, den sogenannten Grillmodus, in dem ein Lebensmittel bestimmungsgemäß zwischen der ersten und der zweiten Kochplatte (3.1, 5.1) eingeklemmt wird, und einen zweiten Betriebsmodus, den sogenannten Barbecue-Modus, aufweist, in dem jede der ersten und der zweiten Kochplatte (3.1, 5.1) ein jeweiliges Lebensmittel tragen und kochen kann,
wobei das Kochgerät (1) eine zweite Benutzerschnittstelle (11) umfasst, die an der zweiten Struktur (4) angeordnet ist, **dadurch gekennzeichnet, dass** die erste Benutzerschnittstelle (10) dem ersten Betriebsmodus gewidmet ist und die zweite Benutzerschnittstelle (11) dem zweiten Betriebsmodus gewidmet ist, und dadurch, dass die Steuereinheit (13) so konfiguriert ist, dass sie die erste Benutzerschnittstelle (10) aktiviert und die zweite Benutzerschnittstelle (11) deaktiviert, wenn sich das Kochgerät im ersten Betriebsmodus befindet, und die zweite Benutzerschnittstelle (11) aktiviert und die erste Benutzerschnittstelle (10) deaktiviert, wenn sich das Kochgerät(1) im zweiten Betriebsmodus befindet.

2. Kochgerät (1) nach Anspruch 1, wobei die Steuereinheit (13) so konfiguriert ist, dass sie die erste Benutzerschnittstelle (10) aktiviert und die zweite Benutzerschnittstelle (11) deaktiviert, wenn von der Steuereinheit (13) eine erste Aktivierungsbedingung erkannt wird, und die zweite Benutzerschnittstelle (11) aktiviert und die erste Benutzerschnittstelle (10) deaktiviert, wenn von der Steuereinheit (13) eine zweite Aktivierungsbedingung erkannt wird.

3. Kochgerät (1) nach Anspruch 2, das derart konfiguriert ist, dass die erste Aktivierungsbedingung erreicht wird, wenn die zweite Struktur (4) aus der maximalen Öffnungsposition in Richtung der Schließposition geschwenkt wird und eine erste vorbestimmte Position erreicht, die sich zwischen der Schließposition und der maximalen Öffnungsposition befindet, und derart, dass die zweite Aktivierungsbedingung erreicht wird, wenn die zweite Struktur (4) aus der Schließposition in Richtung der maximalen Öffnungsposition geschwenkt wird und eine zweite vorbestimmte Position erreicht, die sich zwischen der Schließposition und der maximalen Öffnungsposition befindet.

4. Kochgerät (1) nach Anspruch 3, wobei die erste und die zweite vorbestimmte Position identisch sind.

5. Kochgerät (1) nach einem der vorstehenden Ansprüche, wobei die zweite Struktur (4) eine Zwischenöffnungsposition einnehmen kann, die stabil ist und sich zwischen der Schließposition und der maximalen Öffnungsposition befindet.

6. Kochgerät (1) nach Anspruch 5, das eine Sperrvorrichtung (18) umfasst, die zwischen einem Sperrzustand, in dem die Schwenkamplitude der zweiten Struktur (4) auf ein Schwenken zwischen der Schließposition und der Zwischenöffnungsposition beschränkt ist, und einem Freigabezustand beweglich ist, in dem die zweite Struktur (4) bis zur maximalen Öffnungsposition verlagert werden kann.

7. Kochgerät (1) nach Anspruch 6, wobei die Sperrvorrichtung (18) einen Bedienteil (19) und einen Sperrteil umfasst, die mechanisch verbunden sind, wobei der Bedienteil (19) zwischen einer ersten Position und einer zweiten Position beweglich angebracht ist, die Sperrvorrichtung (18) derart konfiguriert ist, dass eine Verlagerung des Bedienteils (19) von der ersten Position in die zweite Position eine Verlagerung des Sperrteils in eine Sperrposition bewirkt, die dem Sperrzustand der Sperrvorrichtung (18) entspricht, und derart, dass eine Verlagerung des Bedienteils (19) von der zweiten Position in die erste Position eine Verlagerung des Sperrteils in eine Freigabeposition bewirkt, die dem Freigabezustand der Sperrvorrichtung (18) entspricht.

8. Kochgerät (1) nach einem der vorstehenden Ansprüche, das weiter einen elektrischen Kontakt (15) umfasst, der so konfiguriert ist, dass er einen ersten Zustand einnimmt, wenn sich das Kochgerät (1) im ersten Betriebsmodus befindet, und so konfiguriert ist, dass er einen zweiten Zustand einnimmt, wenn sich das Kochgerät (1) im zweiten Betriebsmodus befindet.

9. Kochgerät (1) nach den Ansprüchen 3 und 8, das eine Betätigungsvorrichtung umfasst, die so konfiguriert ist, dass sie den elektrischen Kontakt (15) in den ersten Zustand verlagert, wenn die zweite Struktur (4) aus der maximalen Öffnungsposition in Richtung der Schließposition geschwenkt wird und die erste vorbestimmte Position erreicht, und den elektrischen Kontakt (15) in den zweiten Zustand verlagert, wenn die zweite Struktur (4) aus der Schließposition in Richtung der Zwischenöffnungsposition geschwenkt wird und die zweite vorbestimmte Position erreicht.

10. Kochgerät (1) nach Anspruch 9, wobei die Betätigungsvorrichtung umfasst:
- ein Betätigungsglied (17), das zwischen einer Betätigungsposition, in der das Betätigungsglied (17) so konfiguriert ist, dass es den elektrischen Kontakt (15) aktiviert, und einer Ruheposition beweglich ist, in der das Betätigungsglied (17) so konfiguriert ist, dass es den elektrischen Kontakt (15) deaktiviert, und
- eine Nocke (16), die so konfiguriert ist, dass sie das Betätigungsglied (17) von der Ruheposition in die Betätigungsposition verlagert, wenn die zweite Struktur (4) die erste vorbestimmte Position oder die zweite vorbestimmte Position erreicht.

11. Kochgerät (1) nach Anspruch 9 in Kombination mit Anspruch 6 oder 7, wobei die Betätigungsvorrichtung mindestens zum Teil von der Sperrvorrichtung (18) gebildet wird.

12. Kochgerät (1) nach einem der vorstehenden Ansprüche, wobei die zweite Struktur (4) einen Greifgriff (6) umfasst, der so konfiguriert ist, dass er von einem Benutzer bedient werden kann, wobei die zweite Benutzerschnittstelle (11) am Greifgriff (6) vorgesehen ist.

13. Kochgerät (1) nach Anspruch 12, wobei der Greifgriff (6) mit der horizontalen Flächen in Kontakt steht, wenn die erste Struktur (2) auf einer horizontalen Fläche ruht und die zweite Struktur (4) die maximale Öffnungsposition einnimmt.

14. Kochgerät (1) nach einem der vorstehenden Ansprüche, wobei die erste Kochplatte (3.1) so konfiguriert ist, dass sie nach unten und zu einer Vorderseite (12) der ersten Struktur (2) geneigt ist, wenn das Kochgerät (1) auf einer horizontalen Fläche ruht.

15. Kochgerät (1) nach einem der vorstehenden Ansprüche, das weiter einen Kochsaft-Sammelbehälter (21) umfasst, der so konfiguriert ist, dass er Kochsäfte von mindestens der ersten Kochplatte (3.1) sammelt, wobei der Kochsaft-Sammelbehälter (21) mindestens zum Teil unter dem ersten Kochmodul (3) angeordnet ist.

16. Kochgerät (1) nach dem vorstehenden Anspruch, wobei die erste Kochplatte (3.1) einen stirnseitigen Ausgussteil (22) umfasst, der an einem vorderen Rand der ersten Kochplatte (3.1) vorgesehen ist und sich vertikal senkrecht über einem vorderen Teil des Kochsaft-Sammelbehälters (21) befindet, wobei der stirnseitige Ausgussteil (22) so konfiguriert ist, dass er ein Abfließen des Kochsafts von der ersten Kochplatte (3.1) in den Kochsaft-Sammelbehälter (21) durch Schwerkraft ermöglicht.

17. Kochgerät (1) nach einem der vorstehenden Ansprüche, wobei die erste Benutzerschnittstelle (10) an einer seitlichen Seite der ersten Struktur (2) angeordnet ist.

## Claims

1. Cooking appliance (1) for cooking food products, the cooking appliance (1) comprising:
- a first structure (2) comprising a first cooking module (3) comprising a first cooking plate (3.1),
- a second structure (4) comprising a second cooking module (5) comprising a second cooking plate (5.1),
- a pivot connection (9) connecting the second structure (4) to the first structure (2) and configured to enable a pivoting of the second structure (4) with respect to the first structure (2) about a pivot axis (A1) and between a closing position, in which the first cooking plate (3.1) and the second cooking plate (5.1) have a minimum spacing, and a maximum opening position, in which the first cooking plate (3.1) and the second cooking plate (5.1) have a maximum spacing when the cooking appliance (1) rests on a support surface (SA) which is horizontal,
- a first user interface (10) disposed on the first structure (2),
- a control unit (13) configured to control the operation of the cooking appliance (1),
the cooking appliance (1) having a first user mode, called grill mode, in which a food is intended to be inserted between the first and second cooking plates (3.1, 5.1), and a second user mode, called barbecue mode, in which each of the first and second cooking plates (3.1, 5.1) is capable of supporting and cooking a respective food,
the cooking appliance (1) comprising a second user interface (11) disposed on the second structure (4), **characterised in that** the first user interface (10) is dedicated to the first use mode and the second user interface (11) is dedicated to the second use mode, and **in that** the control unit (13) is configured to activate the first user interface (10) and deactivate the second user interface (11) when the cooking appliance is in the first use mode, and to activate the second user interface (11) and deactivate the first user interface (10) when the cooking appliance (1) is in the second use mode.

2. Cooking appliance (1) according to claim 1, wherein the control unit (13) is configured to activate the first user interface (10) and deactivate the second user interface (11) when a first activation condition is detected by the control unit (13), and to activate the second user interface (11) and deactivate the first user interface (10) when a second activation condition is detected by the control unit (13).

3. Cooking appliance (1) according to claim 2, which is configured such that the first activation condition is reached when the second structure (4) is pivoted, from the maximum opening position, in the direction of the closing position and reaches a first predetermined position located between the closing position and the maximum opening position, and such that the second activation condition is reached when the second structure (4) is pivoted, from the closing position, in the direction of the maximum opening position and reaches a second predetermined position located between the closing position and the maximum opening position.

4. Cooking appliance (1) according to claim 3, wherein the first and second predetermined positions are identical.

5. Cooking appliance (1) according to any one of the preceding claims, wherein the second structure (4) is capable of occupying an intermediate opening position which is stable and located between the closing position and the maximum opening position.

6. Cooking appliance (1) according to claim 5, which comprises a blocking device (18) which is moveable between a blocking state, in which the pivot amplitude of the second structure (4) is restricted to a pivoting between the closing position and the intermediate opening position, and an unblocking state in which the second structure (4) is capable of being moved to the maximum opening position.

7. Cooking appliance (1) according to claim 6, wherein the blocking device (18) comprises a handling part (19) and a blocking part, which are mechanically connected, the handling part (19) being movably mounted between a first position and a second position, the blocking device (18) is configured such that a movement of the handling part (19) from the first position to the second position leads to a movement of the blocking part in a blocking position corresponding to the blocking state of the blocking device (18), and such that a movement of the handling part (19) from the second position to the first position leads to a movement of the blocking part in an unblocking position corresponding to the unblocking state of the blocking device (18).

8. Cooking appliance (1) according to any one of the preceding claims, which further comprises an electric contact (15) configured to occupy a first state when the cooking appliance (1) is in the first use mode, and configured to occupy a second state when the cooking appliance (1) is in the second use mode.

9. Cooking appliance (1) according to claims 3 and 8, which comprises an actuation device configured to move the electric contact (15) in the first state when the second structure (4) is pivoted, from the maximum opening position, in the direction of the closing position and reaches the first predetermined position, and to move the electric contact (15) in the second state when the second structure (4) is pivoted, from the closing position, in the direction of the intermediate opening position and reaches the second predetermined position.

10. Cooking appliance (1) according to claim 9, wherein the actuation device comprises:
- an actuation member (17) which is movable between an actuation position in which the actuation member (17) is configured to activate the electric contact (15) and a rest position in which the actuation member (17) is configured to deactivate the electric contact (15), and
- a cam (16) configured to move the actuation member (17) from the rest position to the actuation position when the second structure (4) reaches the first predetermined position or the second predetermined position.

11. Cooking appliance (1) according to claim 9 combined with claim 6 or 7, wherein the actuation device is formed at least partially by the blocking device (18).

12. Cooking appliance (1) according to any one of the preceding claims, wherein the second structure (4) comprises a handle (6) configured to be handled by a user, the second user interface (11) being provided on the handle (6).

13. Cooking appliance (1) according to claim 12, wherein, when the first structure (2) rests on a horizontal surface and when the second structure (4) occupies the maximum opening position, the handle (6) is in contact with said horizontal surface.

14. Cooking appliance (1) according to any one of the preceding claims, wherein the first cooking plate (3.1) is configured to be inclined towards the bottom and towards a front face (12) of the first structure (2) when the cooking appliance (1) rests on a horizontal surface.

15. Cooking appliance (1) according to any one of the preceding claims, which further comprises a cooking juice collecting tray (21) configured to collect cooking juice coming from at least the first cooking plate (3.1), the cooking juice collecting tray (21) being disposed at least partially under the first cooking module (3).

16. Cooking appliance (1) according to the preceding claim, wherein the first cooking plate (3.1) comprises a front discharge part (22) which is provided on a front edge of the first cooking plate (3.1) and which is located in vertical alignment with a front part of the cooking juice collecting tray (21), the front discharge part (22) being configured to enable a flowing, through gravity, of the cooking juices coming from the first cooking plate (3.1) into the cooking juice collecting tray (21).

17. Cooking appliance (1) according to any one of the preceding claims, wherein the first user interface (10) is disposed on a side face of the first structure (2).
